(19) Europäisches Patentamt
European Patent Office
Office européen des brevets

(11) **EP 3 795 248 A1**

(12) **EUROPEAN PATENT APPLICATION**
published in accordance with Art. 153(4) EPC

(43) Date of publication:
24.03.2021 Bulletin 2021/12

(21) Application number: 19804184.0

(22) Date of filing: 16.05.2019

(51) Int Cl.:
*B01J 35/04* [(2006.01)]   *B01D 39/14* [(2006.01)]
*B01D 53/94* [(2006.01)]   *B01J 23/63* [(2006.01)]
*F01N 3/022* [(2006.01)]   *F01N 3/035* [(2006.01)]
*F01N 3/10* [(2006.01)]   *F01N 3/28* [(2006.01)]

(86) International application number:
**PCT/JP2019/019437**

(87) International publication number:
**WO 2019/221217 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 17.05.2018   JP 2018095590
17.05.2018   JP 2018095550

(71) Applicant: **N.E. Chemcat Corporation**
**Tokyo 105-6124 (JP)**

(72) Inventors:
• **MOCHIZUKI, Hiroshi**
**Tokyo 105-6124 (JP)**
• **TAKAYAMA, Akito**
**Tokyo 105-6124 (JP)**

(74) Representative: **TBK**
**Bavariaring 4-6**
**80336 München (DE)**

(54) **EXHAUST GAS PURIFICATION CATALYST**

(57)    An exhaust gas purifying catalyst for purifying exhaust gas discharged from an internal combustion engine includes: a wall flow type substrate in which an inflow-side cell having an open exhaust gas inflow-side end, and an outflow-side cell adjacent to the inflow-side cell and having an open exhaust gas outflow-side end are separated by a porous partition wall; and catalyst layer formed at a plurality of locations in pores of the partition wall and containing at least one catalyst metal. The catalyst layer is biasedly located toward a side of the inflow-side cell in a thickness direction of the partition wall.

Fig. 1

EP 3 795 248 A1

## Description

Technical Field

The present invention relates to an exhaust gas purifying catalyst.

Background Art

A particulate material (PM) mainly containing carbon, and ash composed of incombustible components, and the like are contained in exhaust gas discharged from an internal combustion engine. The exhaust gas is known to cause air pollution. In a diesel engine relatively readily discharging a particulate material as compared with a gasoline engine, the amount of the particulate material discharged has been severely regulated. In recent years, also in the gasoline engine, the regulation of the amount of the particulate material discharged has been tightened.

A method in which a particulate filter is provided on an exhaust gas passage of an internal combustion engine in order to deposit and collect a particulate material has been known as means for reducing the amount of the particulate material discharged. In particular, in recent years, from the viewpoint of the space saving of a mounting space, and the like, in order to simultaneously achieve the suppression of the emission of the particulate material and the removal of harmful components such as carbon monoxide (CO), hydrocarbon (HC), and nitrogen oxide ($NO_x$), a catalyst slurry is considered to be coated on the particulate filter, followed by firing, to provide a catalyst layer.

However, if the catalyst layer is provided in the particulate filter in which pressure loss is readily increased by the deposition of the particulate material from the beginning, the exhaust gas passage is narrower. This readily causes further increased pressure loss, which disadvantageously causes reduction in engine output. In order to solve such a problem, for example, Patent Literatures 1 to 3 propose that the types of catalyst layers and positions at which the catalyst layers are provided are devised for the purpose of suppression of an increase in pressure loss and improvement in exhaust gas purifying performance.

Citation List

Patent Literature

Patent Literature 1: WO2016/060048
Patent Literature 2: WO2016/060049
Patent Literature 3: WO2016/060050

Summary of Invention

Technical Problem

Specifically, the following constitution is disclosed in Patent Literature 1. A first catalyst layer is formed in a partition wall on the side of an inlet-side cell, and a second catalyst layer is formed in a partition wall on the side of an outlet-side cell. The length of the first catalyst layer and the second catalyst layer is set to be shorter than the total length of the partition wall to provide higher purifying performance than that when the catalyst layer is extensively formed over the entire partition wall. The following constitution is disclosed in Patent Literature 2. A first catalyst layer is formed in a partition wall on the side of an inlet-side cell, and a second catalyst layer shorter than the total length of a partition wall is formed on the surface of the partition wall on the side of an outlet-side cell to allow purifying performance to be maintained and improved. Furthermore, the following constitution is disclosed in Patent Literature 3. An upstream coating region is provided in a partition wall on the side of an inlet-side cell, and a downstream coating region shorter than the total length of a partition wall is formed in a partition wall on the side of an outlet-side cell. Catalyst metals are unevenly distributed in the surface layer portion of the partition wall in the downstream coating region to allow purifying performance to be maintained and improved.

Thus, various studies have been made for separately forming the catalyst layers on an exhaust gas inflow-side and an exhaust gas outflow-side in the partition wall or on the surface of the partition wall (outside the partition wall) (hereinafter, referred to as "in-wall separable catalyst layer") to achieve the suppression of the increase in pressure loss and the improvement in the exhaust gas purifying performance. Whether or not the suppression of the increase in the pressure loss and further improvement in the exhaust gas purifying performance can be achieved by forming the catalyst layer containing at least two different catalyst metals only on one of the exhaust gas inflow-side and the exhaust gas outflow-side in the partition wall is not sufficiently considered.

The present invention has been made in view of the foregoing problems, and an object of the present invention is to provide an exhaust gas purifying catalyst which suppresses an increase in pressure loss and has improved exhaust gas purifying performance, particularly light-off performance. The exhibition of operations and effects which are derived from each configuration shown in the Description of Embodiments to be described later, and are not obtained by a conventional technique without being limited to the object here can also be positioned as another object of the present invention.

Solution to Problem

The present inventors conducted continuous and intensive studies in order to solve the above-described problems. As a result, room for having further improved exhaust gas purifying performance and suppressing an increase in pressure loss has been found to be provided by forming catalyst layer containing at least two different catalyst metals on an exhaust gas inflow-side (a region upstream in the flow direction of exhaust gas) in a partition wall. The present invention is based on the findings. That is, the present invention provides various specific aspects to be described later.
[1] An exhaust gas purifying catalyst for purifying exhaust gas discharged from an internal combustion engine, comprising:

a wall flow type substrate in which an inflow-side cell having an open exhaust gas inflow-side end, and an outflow-side cell adjacent to the inflow-side cell and having an open exhaust gas outflow-side end are separated by a porous partition wall; and
a catalyst layer formed at a plurality of locations in pores of the partition wall and containing at least one catalyst metal,
wherein the catalyst layer is biasedly located toward a side of the inflow-side cell in a thickness direction of the partition wall.

[2] The exhaust gas purifying catalyst according to [1], wherein the catalyst layer tends to have an increased amount supported as the catalyst layer is closer to a cell wall surface on the side of the inflow-side cell in the thickness direction of the partition wall.
[3] The exhaust gas purifying catalyst according to [1] or [2], wherein, when a wall thickness of the partition wall is taken as Tw, 60% or more of a total mass of the catalyst layer is present in a depth region between a cell wall surface on the side of the inflow-side cell and a position separated by Tw*5/10 from the cell wall surface.
[4] The exhaust gas purifying catalyst according to any one of [1] to [3], wherein, when a wall thickness of the partition wall is taken as Tw, 15% or less of a total mass of the catalyst layer is present in a depth region between a cell wall surface on a side of the outflow-side cell and a position separated by Tw*3/10 from the cell wall surface.
[5] The exhaust gas purifying catalyst according to any one of [1] to [4], wherein the catalyst layer is entirely formed in an extending direction of the partition wall.
[6] The exhaust gas purifying catalyst according to any one of [1] to [5], wherein the catalyst layer are formed from a cell wall surface on a side of the inflow-side cell to a cell wall surface on a side of the outflow-side cell in the thickness direction of the partition wall.
[7] The exhaust gas purifying catalyst according to any one of [1] to [6], wherein the catalyst metal contains Rh, Pd, and Rh, or Pt and Rh.
[8] The exhaust gas purifying catalyst according to any one of [1] to [7], wherein the internal combustion engine is a gasoline engine.

Advantageous Effects of Invention

The present invention can provide an exhaust gas purifying catalyst which suppresses an increase in pressure loss and has improved exhaust gas purifying performance, particularly light-off performance. The exhaust gas purifying catalyst can be utilized in not only a gasoline particulate filter (GPF) but also other particulate filter such as a diesel particulate filter (DPF), as a particulate filter supporting a catalyst, to achieve further improved performance of an exhaust gas treatment system mounted with such a particulate filter.

Brief Description of Drawings

[Figure 1] Figure 1 shows a cross-sectional view schematically showing one aspect of an exhaust gas purifying catalyst of the present embodiment.

[Figure 2] Figure 2 shows a cross-sectional view schematically showing an aspect in which catalyst layer 21 are biasedly located toward the side of an inflow-side cell 11.

[Figure 3] Figure 3 shows a cross-sectional view schematically showing an aspect in which catalyst layer 21 are biasedly located toward the side of an outflow-side cell 12.

[Figure 4] Figure 4 shows a graph showing the measurement results of pressure loss in exhaust gas purifying catalysts produced in Example 1 and Comparative Examples 1 and 2.

[Figure 5] Figure 5 shows a graph showing the results of light-off performance evaluation of an engine bench in exhaust gas purifying catalysts produced in Example 1 and Comparative Examples 1 and 2.

[Figure 6] Figure 6 shows tracing diagrams showing the cross sections of exhaust gas purifying catalysts produced in Example 1 and Comparative Examples 1 and 2.

Description of Embodiments

Hereinafter, an embodiment of the present invention will be described in detail. The following embodiment is one example (representative example) of the embodiment of the present invention, and the present invention is not limited thereto. Modifications of the present invention may be arbitrarily made without departing from the scope thereof. Herein, positional relationships such as upper, lower, left, and right are based on those shown in the drawings unless otherwise specified. The dimensional ratio of the drawings is not limited to the ratio of illustration. Herein, a "D50 particle size" refers to a particle size when an accumulated value from a small particle size reaches 50% of the total in a volume-based particle size cumulative distribution. A "D90 particle size" refers to a particle size when an accumulated value from a small particle size reaches 90% of the total in a volume-based particle size cumulative distribution. Herein, in the case of the expression with "to" sandwiched between numerical values or physical property values before and after "to", "to" is used to include the values before and after "to". For example, the description of the numerical value range "1 to 100" includes both the upper limit value "100" and the lower limit value "1". The same applies to the description of other numerical value ranges.

[Exhaust Gas Purifying Catalyst]

An exhaust gas purifying catalyst of the present embodiment is an exhaust gas purifying catalyst 100 for purifying exhaust gas discharged from an internal combustion engine. The exhaust gas purifying catalyst 100 includes: a wall flow type substrate 10 in which an inflow-side cell 11 having an open exhaust gas inflow-side end 11a, and an outflow-side cell 12 adjacent to the inflow-side cell 11 and having an open exhaust gas outflow-side end 12a are separated by a porous partition wall 13; and catalyst layer 21 formed at a plurality of locations in pores of the partition wall 13 and containing at least one catalyst metal, wherein the catalyst layer 21 are biasedly located toward a side of the inflow-side cell 11 in a thickness direction of the partition wall 13.

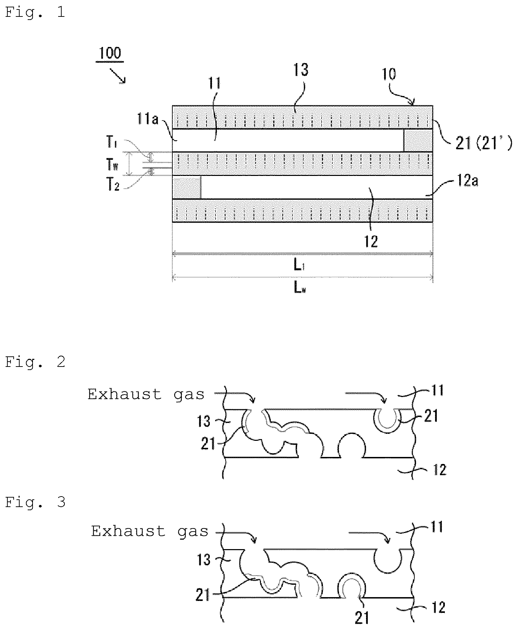

Hereinafter, each constitution will be described with reference to a cross-sectional view showing schematically the exhaust gas purifying catalyst of the present embodiment shown in Figure 1. The exhaust gas purifying catalyst of the present embodiment has a wall flow structure. In the exhaust gas purifying catalyst 100 having such a structure, the exhaust gas discharged from the internal combustion engine flows into the inflow-side cell 11 from the exhaust gas inflow-side end 11a (open), passes through the pores of the partition wall 13, flows into the adjacent outflow-side cell 12, and flows out of the exhaust gas outflow-side end 12a (open). In this process, a particulate material (PM) which is less likely to pass through the pores of the partition wall 13 is generally deposited on the partition wall 13 and/or in the pores of the partition wall 13 in the inflow-side cell 11. The deposited particulate material is burned and removed by the catalyst function of the catalyst layer 21 or at a predetermined temperature (for example, about 500 to 700°C). The exhaust gas is brought into contact with the catalyst layer 21 formed in the pores of the partition wall 13. This causes carbon monoxide (CO) and hydrocarbon (HC) contained in the exhaust gas to be oxidized to water ($H_2O$) or carbon dioxide ($CO_2$) or the like, causes nitrogen oxide (NOx) to be reduced to nitrogen ($N_2$), and causes harmful components to be purified (detoxified). Herein, removal of the particulate material and purification of the harmful components such as carbon monoxide (CO) are also collectively referred to as "exhaust gas purifying performance." Hereinafter, each construction will be described in more detail.

(Substrate)

The wall flow type substrate 10 has a wall flow structure where the inflow-side cell 11 having the open exhaust gas inflow-side end 11a and the outflow-side cell 12 adjacent to the inflow-side cell 11 and having the open exhaust gas outflow-side end 12a are partitioned by the porous partition wall 13.

As the substrate 10, those conventionally used for this type of application and made of various materials and forms can be used. For example, the substrate is preferably composed of heat-resistant material capable of accommodating, for example, the removal of a particulate material by high-temperature combustion as well as exposure to high-temperature (for example, 400°C or higher) exhaust gas produced when an internal combustion engine is operated under a high-load condition. Examples of the heat-resistant material include ceramics such as cordierite, mullite, aluminum titanate, and silicon carbide (SiC); and alloys such as stainless steel. The form of the substrate can be appropriately adjusted from the viewpoint of exhaust gas purifying performance and suppression of an increase in pressure loss, and the like. For example, the outer shape of the substrate may also be a cylindrical shape, an elliptical cylindrical shape, or a polygonal cylindrical shape. Depending on a space in which the substrate will be incorporated, and the like, the capacity of the substrate (total cell volume) is preferably 0.1 to 5 L, and more preferably 0.5 to 3 L. The total length of the substrate in the extending direction (the total length of the partition wall 13 in the extending direction) is preferably 10 to 500 mm, and more preferably 50 to 300 mm.

The inflow-side cell 11 and the outflow-side cell 12 are regularly arranged along the axis direction of the cylindrical shape. For cells adjacent to each other, the open end of one in the extending direction and the open end of another one are alternately sealed off. The inflow-side cell 11 and the outflow-side cell 12 can be set to a suitable shape and size in consideration of the flow rate and components of the exhaust gas to be supplied. For example, the opening shape of the inflow-side cell 11 and outflow-side cell 12 may be a triangle; a rectangular shape such as a square, a parallelogram, a rectangle, or a trapezoid; other polygon such as a hexagon or an octagon; and a circle. The exhaust gas purifying catalyst 100 may have a high ash capacity (HAC) structure where the cross-sectional area of the inflow-side cell 11 and the cross-sectional area of the outflow-side cell 12 are made different from each other. The number of the inflow-side cells 11 and the number of the outflow-side cells 12 can be appropriately set so that the occurrence of the turbulent flow of the exhaust gas can be promoted and clogging due to fine particles and the like contained in the exhaust gas can be suppressed. The number of the inflow-side cells 11 and the number of the outflow-side cells 12 are not particularly limited, and preferably 200 cpsi to 400 cpsi.

The partition wall 13 partitioning the cells adjacent to each other is not particularly limited as long as the partition wall 13 has a porous structure through which the exhaust gas can pass. The constitution of the partition wall 13 can be appropriately adjusted from the viewpoint of exhaust gas purifying performance, suppression of an increase in pressure loss, and improvement in the mechanical strength of a substrate, and the like. For example, when the catalyst layer 21 are formed on the surface of the pores in the partition wall 13 using a catalyst slurry 21a to be described later, and a pore diameter (for example, modal diameter (the pore diameter having the largest appearance ratio in the frequency distribution of the pore diameter (maximum value of distribution))) and a pore volume are large, the blockage of the pores due to the catalyst layer 21 are less likely to occur, and the exhaust gas purifying catalyst to be obtained tends to be less likely to cause an increase in pressure loss. However, the collection ability of the particulate material tends to be reduced, and the mechanical strength of the substrate tends to be also reduced. Meanwhile, when the pore diameter and the pore volume are small, the pressure loss is likely to be increased. However, the collection ability of the particulate material tends to be improved, and the mechanical strength of the substrate tends to be also improved.

From the viewpoint, the pore diameter (modal diameter) of the partition wall 13 of the wall flow type substrate 10 before the catalyst layer 21 are formed is preferably 8 to 25 $\mu$m, more preferably 10 to 22 $\mu$m, and still more preferably 13 to 20 $\mu$m. The thickness of the partition wall 13 (a length in a thickness direction perpendicular to the extending direction) is preferably 6 to 12 mil, and more preferably 6 to 10 mil. Furthermore, the pore volume of the partition wall 13 provided by a mercury intrusion method is preferably 0.2 to 1.5 $cm^3$/g, more preferably 0.25 to 0.9 $cm^3$/g, and still more preferably 0.3 to 0.8 $cm^3$/g. The porosity of the partition wall 13 provided by the mercury intrusion method is preferably 20 to 80%, more preferably 40 to 70%, and still more preferably 60 to 70%. The pore volume or the porosity is greater than or equal to the lower limit, whereby the increase in pressure loss tends to be further suppressed. The pore volume or the porosity is less than or equal to the upper limit, whereby the strength of the substrate tends to be further improved. The pore diameter (modal diameter), the pore volume, and the porosity mean values calculated by the mercury intrusion method under conditions described in the following Examples.

(Catalyst Layer)

Next, the catalyst layer 21 will be described. The catalyst layer 21 are formed at a plurality of locations in the pores of the partition wall 13, and contain at least one catalyst metal. The catalyst layer is biasedly located toward the side of the inflow-side cell 11 in the thickness direction of the partition wall 13 (Figure 2). The catalyst layer 21 have such a constitution, whereby exhaust gas purifying performance, particularly light-off performance tends to be improved while an increase in pressure loss is suppressed.

The following points are considered as this reason. The exhaust gas flowing into the pores of the partition wall 13 can be immediately brought into contact with the catalyst layer 21 formed on the side of the inflow-side cell 11 (see Figure 2). Therefore, as compared with a case where catalyst layer are formed at other places, the catalyst layer 21 disposed on the side of the inflow-side cell 11 particularly tend to be readily warmed by engine exhaust gas having a temperature relatively higher than that of the exhaust gas purifying catalyst 100 at the time of engine starting and the like. An increase in the temperature of the catalyst layer 21 is considered to cause exhaust gas purification to more efficiently proceed to provide further improved light-off performance. The catalyst layer 21 disposed on the side of the inflow-side cell 11 are considered to have more excellent contact with the exhaust gas to provide further improved exhaust gas purifying performance. This is considered to be because the catalyst layer 21 disposed on the side of the outflow-side cell 12 may be disposed also at places where the catalyst layer 21 are comparatively less likely to be brought into contact with the exhaust gas in consideration of the flow of the exhaust gas, by contrast, the catalyst layer 21 disposed on the side of the inflow-side cell 11 tend to be coated and formed in the same direction as the introduction direction of the exhaust gas with respect to a complicated pore shape, whereby the contacting properties of the catalyst layer 21 with the exhaust gas tend to be relatively readily improved (see Figures 2 and 3). However, the reason why the exhaust gas purifying performance is improved is not limited to the above.

The aspect in which the catalyst layer 21 are unevenly distributed is not particularly limited as long as it is an aspect in which desired exhaust gas purifying performance and an effect of suppressing an increase in pressure loss can be exhibited. The catalyst layer 21 preferably tends to have an increased amount supported as the catalyst layer is closer to a cell wall surface on the side of the inflow-side cell 11 in the thickness direction of the partition wall 13. Thereby, the exhaust gas purifying performance, particularly the light-off performance tends to be improved from the same viewpoint as the above.

In one aspect showing such uneven distribution, when the wall thickness of the partition wall 13 is taken as Tw, 60% or more of the total mass of the catalyst layer 21 is preferably present in a depth region T1 between a cell wall surface on the side of the inflow-side cell 11 and a position separated by Tw*5/10 from the cell wall surface. The amount of the catalyst layer 21 supported in the depth region T1 is preferably 65% or more, more preferably 70% or more, and still more preferably 75% or more, based on the total mass of the catalyst layer 21 of the cross section of the partition wall 13. In the depth region T1 between the cell wall surface on the side of the inflow-side cell 11 and the position separated by Tw*5/10 from the cell wall surface, the catalyst layer 21 are unevenly distributed so that the amount of the catalyst layer 21 supported is 60% or more, which tends to provide improved exhaust gas purifying performance, particularly light-off performance from the same viewpoint as the above.

In other aspect, when the wall thickness of the partition wall 13 is taken as Tw, 15% or less of the total mass of the catalyst layer 21 is preferably present in a depth region T2 between a cell wall surface on the side of the outflow-side cell 12 and a position separated by Tw*3/10 from the cell wall surface. The amount of the catalyst layer 21 supported in the depth region T2 is preferably 12% or less, more preferably 10% or less, and still more preferably 8% or less, based on the total mass of the catalyst layer 21 of the cross section of the partition wall 13. In the depth region T2 between the cell wall surface on the side of the outflow-side cell 12 and the position separated by Tw*3/10 from the cell wall surface, the catalyst layer 21 are unevenly distributed so that the amount of the catalyst layer 21 supported is 15% or less, which tends to provide improved exhaust gas purifying performance, particularly light-off performance from the same viewpoint as the above.

In the present embodiment, as long as the catalyst layer 21 are biasedly located toward the side of the inflow-side cell 11 in the thickness direction of the partition wall 13, some of the catalyst layer 21 may be present on the side of the outflow-side cell 12. In other words, the catalyst layer 21 may be formed from the cell wall surface on the side of the inflow-side cell 11 toward the cell wall surface on the side of the outflow-side cell 12 in the thickness direction of the partition wall 13 as long as the catalyst layer 21 are biasedly located toward the side of the outflow-side cell 12 in the thickness direction of the partition wall 13.

The uneven distribution of the catalyst layer 21 can be confirmed by observing the cross section of the partition wall 13 of the exhaust gas purifying catalyst 100 with a scanning electron microscope. Specifically, a portion occupied by the catalyst layer 21 is specified in a scanning electron microscope photograph of the cross section of the partition wall 13, and divided into ten in the thickness direction of the partition wall 13. The areas of the catalyst layer 21 can be integrated for every area to determine the uneven distribution of the catalyst layer. In this case, it is desirable that the areas are measured at at least three places, i.e., a portion of the partition wall 13 close to the exhaust gas inflow-side end 11a, a portion of the partition wall 13 close to the exhaust gas outflow-side end 12a, and a central portion therebetween, to obtain the average value of the areas.

In the extending direction (length direction) of the partition wall 13, it is preferable that a range L1 in which the catalyst layer 21 are formed (the coating length of the catalyst layer 21) is entirely formed with a total length $L_w$ of the wall flow type substrate 10 in the extending direction (the total length of the partition wall 13 in the extending direction) as 100%. Specifically, the ratio of the range L1 to the total length $L_w$ is preferably 80 to 100%, more preferably 90 to 100%, and still more preferably 95 to 100%.

The catalyst metals contained in the catalyst layer 21 is not particularly limited, and various metal species which can function as oxidation catalysts and reduction catalysts can be used. Examples thereof include platinum group metals such as platinum (Pt), palladium (Pd), rhodium (Rh), ruthenium (Ru), iridium (Ir), and osmium (Os). Among these, from the viewpoint of oxidation activity, palladium (Pd) and platinum (Pt) are preferable, and from the viewpoint of reduction activity, rhodium (Rh) is preferable. In the present embodiment, as described above, the exhaust gas purifying catalyst 100 includes the catalyst layer 21 containing at least one catalyst metal in a mixed state. In particular, a synergistic effect provided by different catalyst activities is expected by the combination use of two types or more of catalyst metals.

The aspect of the combination of the catalyst metals is not particularly limited, and examples thereof include a combination of two types or more of catalyst metals having excellent oxidation activity, a combination of two types or more of catalyst metals having excellent reduction activity, and a combination of a catalyst metal having excellent oxidation activity and a catalyst metal having excellent reduction activity. Among these, one aspect of the synergistic effect is preferably the combination of a catalyst metal having excellent oxidation activity and a catalyst metal having excellent reduction activity, and more preferably a combination containing at least Rh, Pd, and Rh, or Pt and Rh. The combination tends to provide further improved exhaust gas purifying performance, particularly light-off performance.

The catalyst layer 21 containing the catalyst metals can be confirmed by observing the cross section of the partition wall 13 of the exhaust gas purifying catalyst with a scanning electron microscope and the like. Specifically, it can be confirmed by subjecting the field of view of the scanning electron microscope to energy dispersive X-ray analysis.

Inorganic compounds heretofore used for this type of catalyst for exhaust gas purification can be considered as carrier particles contained in the catalyst layer 21 and supporting the catalyst metals. Examples thereof include oxygen storage capacity materials (OSC materials) such as cerium oxide (ceria: $CeO_2$) and ceria-zirconia composite oxide (CZ composite oxide), oxides such as aluminum oxide (alumina: $Al_2O_3$), zirconium oxide (zirconia: $ZrO_2$), silicon oxide (silica: $SiO_2$), and titanium oxide (titania: $TiO_2$), and composite oxides mainly containing the oxides. These may be composite oxides or solid solutions containing rare earth elements such as lanthanum and yttrium, transition metal elements, and alkaline-earth metal elements. These carrier particles may be used alone or in combination of two or more. Herein, the oxygen storage capacity material (OSC material) stores oxygen in the exhaust gas when the air-fuel ratio of the exhaust gas is lean (that is, an atmosphere on the oxygen excess side), and releases the stored oxygen when the air-fuel ratio of the exhaust gas is rich (that is, an atmosphere on the fuel excess side).

From the viewpoint of improvement in the exhaust gas purifying performance, and suppression of the progression of the grain growth (sintering) of the catalyst metals, and the like, the supporting rate of the catalyst metals of the catalyst layer 21 (the mass of the catalyst metals per substrate 1L) is preferably 0.5 to 10 g/L, more preferably 1 to 8 g/L, and still more preferably 1 to 6 g/L.

The pore diameter (modal diameter) of the partition wall 13 of the exhaust gas purifying catalyst provided by the mercury intrusion method, in a state where the catalyst layer 21 are formed is preferably 10 to 23 $\mu$m, more preferably 12 to 20 $\mu$m, and still more preferably 14 to 18 $\mu$m. The pore volume of the partition wall 13 of the exhaust gas purifying catalyst provided by the mercury intrusion method, in a state where the catalyst layer 21 are formed is preferably 0.2 to 1.0 cm$^3$/g, more preferably 0.25 to 0.9 cm$^3$/g, and still more preferably 0.3 to 0.8 cm$^3$/g. Furthermore, the porosity of the partition wall 13 of the exhaust gas purifying catalyst provided by the mercury intrusion method, in a state where the catalyst layer 21 are formed is preferably 20 to 80%, more preferably 30 to 70%, and still more preferably 35 to 60%. The pore diameter (modal diameter), the pore volume, and the porosity mean values calculated by the mercury intrusion method under conditions described in the following Examples.

[Method for Producing Exhaust Gas Purifying Catalyst]

A method for producing an exhaust gas purifying catalyst of the present embodiment is a method for producing an exhaust gas purifying catalyst 100 for purifying exhaust gas discharged from an internal combustion engine. The method includes: a step S0 of preparing a wall flow type substrate 10 in which an inflow-side cell 11 having an open exhaust gas inflow-side end 11a, and an outflow-side cell 12 adjacent to the inflow-side cell 11 and having an open exhaust gas outflow-side end 12a are separated by a porous partition wall 13; and a catalyst layer forming step S1 of forming catalyst layer 21 biasedly located toward the surface of pores present on the side of the inflow-side cell 11 in the partition wall 13.

Hereinafter, each of the steps will be described. Herein, a wall flow type substrate before the catalyst layer 21 are formed is represented as "substrate 10", and a wall flow type substrate after the catalyst layer 21 are formed is represented as "exhaust gas purifying catalyst 100."

<Preparing Step>

In the preparing step S0, the wall flow type substrate 10 described in the exhaust gas purifying catalyst 100 is prepared as a substrate.

<Catalyst Layer Forming Step>

In the catalyst layer forming step S1, a catalyst slurry 21a is coated on the surface of the pores present on the side of the inflow-side cell 11 in the partition wall 13, followed by drying and firing, to form the unevenly distributed catalyst layer 21. The method for coating the catalyst slurry 21a is not particularly limited, and examples thereof include a method in which a part of the substrate 10 is impregnated with the catalyst slurry 21a, to spread the catalyst slurry 21a over the entire partition wall 13 of the substrate 10. More specific examples thereof include a method including a step S1a of impregnating the exhaust gas inflow-side end 11a of the substrate 10 with the catalyst slurry 21a, and a step S1b of introducing gas into the substrate 10 from the side of the exhaust gas inflow-side end 11a to coat the catalyst slurry 21a with which the substrate 10 is impregnated on the surface of the pores.

Examples of the method for unevenly distributing the catalyst layer 21 on the side of the inflow-side cell 11 in the partition wall 13 include a method including a drying step S1c of introducing gas F into the wall flow type substrate 10 after coating from the exhaust gas inflow-side end 11a to dry the coated catalyst slurry 21a. The introduced gas F promotes the drying of the catalyst slurry 21a from the surface side of the partition wall 13 on the exhaust gas inflow-side, whereby the catalyst slurry 21a is gathered by capillarity from the undried partition wall 13 portion to the dried portion. As a result, a dried catalyst slurry 21a' is unevenly distributed in the dried portion. This makes it possible to unevenly distribute the dried catalyst slurry 21a' on the side of the inflow-side cell 11 in which the gas F is introduced in the thickness direction of the partition wall 13.

In addition to the above, a method in which the catalyst slurry 21a is coated on the side of the inflow-side cell 11 in the partition wall 13, and the coated catalyst slurry 21a is dried and fired can be used without particular limitation. Examples thereof include a method in which the viscosity and solid content of the catalyst slurry 21a on the side of the outflow-side cell 12 in the partition wall 13 are adjusted, or a coating condition and a drying condition after coating are also adjusted if needed, in order to adjust the penetration distance of the catalyst slurry 21a into the pores in the partition wall 13.

The impregnation method of the catalyst slurry 21a in the step S1a is not particularly limited, and examples thereof include a method in which an end of the substrate 10 is immersed in the catalyst slurry 21a. In the method, the catalyst slurry 21a may be pulled up by discharging (suctioning) gas from its opposite end if needed. The catalyst slurry 21a is supplied into the wall flow type substrate 10 from the exhaust gas inflow-side end 11a.

In the step S1b, gas is introduced into the substrate 10 from the side of the end impregnated with the catalyst slurry 21a, to coat the catalyst slurry 21a in the pores present on the side of the inflow-side cell 11. Examples of the method for coating the catalyst slurry 21a include a method in which a difference of atmospheric pressure is generated in both ends of the substrate 10. Specifically, the catalyst slurry 21a can be coated by applying a pressure so that the catalyst slurry 21a with which the exhaust gas inflow-side end 11a is impregnated is coated toward the side of the exhaust gas outflow-side end 12a, with the exhaust gas inflow-side end 11a set to a relatively high pressure.

In step S1c, the coated catalyst slurry 21a is dried to produce the dried catalyst slurry 21a'. The drying condition in the step S1c is not particularly limited as long as a solvent is volatilized from the catalyst slurry 21a. For example, a drying temperature is preferably 100 to 225°C, more preferably 100 to 200°C, and still more preferably 125 to 175°C. A drying time is preferably 0.5 to 2 hours, and more preferably 0.5 to 1.5 hours.

Examples of a method considered as a drying method include a method in which gas F is introduced into the substrate 10 from the exhaust gas inflow-side end 11a to promote drying, in addition to a method in which the substrate 10 after the step S1b is left still at a predetermined drying temperature.

Then, in the step S1d, the catalyst slurry 21a' dried as described above is fired, to form the catalyst layer 21. A firing condition in the step S1d is not particularly limited as long as the catalyst layer 21 can be formed from the dried catalyst slurry 21a'. For example, a firing temperature is not particularly limited, and preferably 400 to 650°C, more preferably 450 to 600°C, and still more preferably 500 to 600°C. A firing time is preferably 0.5 to 2 hours, and more preferably 0.5 to 1.5 hours.

(Catalyst Slurry)

The catalyst slurry 21a for forming the catalyst layer 21 will be described. The catalyst slurry 21a contains a catalyst powder and a solvent such as water. The catalyst powder is a population of a plurality of catalyst particles containing catalyst metal particles and carrier particles supporting the catalyst metal particles, and the catalyst layer 21 are formed through a firing step to be described later. The catalyst particles are not particularly limited, and can be appropriately selected to be used from known catalyst particles. From the viewpoint of the coatability of the catalyst slurry 21a into the pores in the partition wall 13, the solid content rate of the catalyst slurry 21a is preferably 1 to 50% by mass, more preferably 10 to 40% by mass, and still more preferably 15 to 30% by mass. By the solid content rate, the catalyst slurry 21a tends to be readily coated on the side of the inflow-side cell 11 in the partition wall 13.

The D90 particle size of the catalyst powder contained in the catalyst slurry 21a is preferably 1 to 7 $\mu$m, more

preferably 1 to 6 μm, and still more preferably 1 to 5 μm. When the D90 particle size is 1 μm or more, a pulverization time when the catalyst powder is ground in a milling apparatus can be shortened, which tends to provide further improved work efficiency. When the D90 particle size is 7 μm or less, the blockage of the pores in the partition wall 13 by coarse particles is suppressed, which tends to suppress an increase in pressure loss. Herein, the D90 particle size can be measured with a laser diffraction particle size analyzer (for example, a laser diffraction particle size analyzer SALD-3100, manufactured by Shimadzu Corporation, and the like).

As the catalyst metals contained in the catalyst slurry 21a, various metal species which can function as oxidation catalysts and reduction catalysts can be used in combination of two or more. Specific examples thereof include the same catalyst metals as those exemplified in the catalyst metals contained in the catalyst layer 21. In one aspect, examples of the combination of the catalyst metals contained in the catalyst slurry 21a include the same aspect as that described in the catalyst layer 21 formed from the catalyst slurry 21a. Specific examples thereof include a combination of two types or more of catalyst metals having excellent oxidation activity, a combination of two types or more of catalyst metals having excellent reduction activity, and a combination of a catalyst metal having excellent oxidation activity and a catalyst metal having excellent reduction activity. Among these, one aspect of the synergistic effect is preferably the combination of a catalyst metal having excellent oxidation activity and a catalyst metal having excellent reduction activity, and more preferably a combination containing at least Pd and Rh.

From the viewpoint of increasing the area of contact with exhaust gas, the average particle size of the catalyst metal particles in the catalyst slurry 21a is preferably smaller. Specifically, the average particle size of the catalyst metal particles is preferably 1 to 15 nm, more preferably 1 to 10 nm, and still more preferably 1 to 7 nm. The average particle size of the catalyst metal particles can be confirmed by using, for example, a scanning transmission electron microscope (STEM) such as HD-2000 manufactured by Hitachi High-Technologies Corporation. Herein, the circle-equivalent diameters of ten randomly extracted catalyst metal particles are calculated, and the average value thereof is taken as the average particle size of the catalyst metal particles.

As the carrier particles contained in the catalyst slurry 21a, an inorganic compound heretofore used for this type of catalyst for exhaust gas purification can be considered. Specific examples thereof include the same carrier particles as those exemplified in the carrier particles contained in the catalyst layer 21. These carrier particles may be used alone or in combination of two or more.

From the viewpoint of exhaust gas purifying performance, the specific surface area of the carrier particles contained in the catalyst slurry 21a is preferably 10 to 500 $m^2/g$, and more preferably 30 to 200 $m^2/g$.

From the viewpoint of improvement in the exhaust gas purifying performance, and suppression of the progression of the grain growth (sintering) of the catalyst metals, and the like, the supporting rate of the catalyst metals (the mass of the catalyst metals per substrate 1L) derived from the catalyst slurry 21a in a state where the catalyst metals are supported on the wall flow type substrate 10 is preferably 0.5 to 10 g/L, more preferably 1 to 8 g/L, and still more preferably 1 to 6 g/L.

[Application]

An air-fuel mixture containing oxygen and fuel gas is supplied into the internal combustion engine (engine), where the air-fuel mixture is burned to convert combustion energy into mechanical energy. At this time, the burned air-fuel mixture becomes exhaust gas and is discharged to the exhaust system. An exhaust gas purifying apparatus including an exhaust gas purifying catalyst is provided in the exhaust system. The exhaust gas purifying catalyst purifies harmful components (for example, carbon monoxide (CO), hydrocarbon (HC), and nitrogen oxides (NOx)) contained in the exhaust gas, and collects and removes a particulate material (PM) contained in the exhaust gas. In particular, the exhaust gas purifying catalyst 100 of the present embodiment is preferably used for a gasoline particulate filter (GPF) which can collect and remove the particulate material contained in the exhaust gas of the gasoline engine.

Examples

Hereinafter, the features of the present invention will be described further specifically by way of Test Examples, Examples, and Comparative Examples, but the present invention is in no way limited thereto. That is, materials, used amounts, ratios, treatment contents, and treatment procedures and the like shown in the following Examples can be appropriately changed without departing from the spirit of the present invention. Various values specified in the following Examples for production conditions and evaluation results have meaning as preferable upper limits or preferable lower limits in embodiments of the present invention, and a preferable range may be defined by a combination of the upper or lower limit described above and a value specified in one of the following Examples or values specified in different Examples.

(Example 1)

An alumina powder having a D50 particle size of 28 $\mu$m and a BET specific surface area of 141 m$^2$/g was impregnated with an aqueous solution of palladium nitrate, and then fired at 500°C for 1 hour, to obtain a Pd-supporting alumina powder (Pd content: 8.6% by mass). A zirconia-lanthanum modified alumina powder having a D50 particle size of 29 $\mu$m and a BET specific surface area of 145 m$^2$/g was impregnated with an aqueous solution of rhodium nitrate, and then fired at 500°C for 1 hour, to obtain a Rh-supporting zirconia lanthanum modified alumina powder (Rh content: 1.4% by mass).

0.5 kg of the obtained Pd-supporting alumina powder, 0.5 kg of the Rh-supporting zirconia lanthanum modified alumina powder, 2 kg of a ceria zirconia composite oxide powder having a D50 particle size of 10 $\mu$m and a BET specific surface area of 71 m$^2$/g, 195 g of an aqueous solution of 46% lanthanum nitrate, and ion exchange water were mixed to obtain a mixture. The mixture was charged into a ball mill, where the mixture was milled until a catalyst powder had a predetermined particle size distribution, to obtain a catalyst slurry having a D90 particle size of 3.0 $\mu$m.

Then, a wall flow type honeycomb substrate was prepared, which was made of cordierite (number of cells/mil thickness: 300 cpsi/8 mil, diameter: 118.4 mm, total length: 127 mm, porosity: 65%). By immersing an exhaust gas inflow-side end of the substrate in the catalyst slurry, and subjecting the side of its opposite end to reduced-pressure suction, the catalyst slurry was impregnated and retained in the substrate end. Gas was caused to flow into the substrate from the side of the end face in which the catalyst slurry was impregnated and retained, to coat the catalyst slurry on the surface of pores in a partition wall, and to blow off the excess catalyst slurry from an exhaust gas outflow-side end of the substrate. Then, the substrate on which the catalyst slurry was coated was dried at 150°C while gas was caused to flow into the substrate from the exhaust gas inflow-side end, whereby the dried catalyst slurry was biasedly located toward the side of an inflow-side cell of the partition wall. The dried catalyst slurry biasedly located toward the side of the inflow-side cell was fired at 550°C in an air atmosphere. Thereby, an exhaust gas purifying catalyst was produced, which had catalyst layer biasedly located toward the side of the inflow-side cell in a thickness direction from the sealed open end to the exhaust gas inflow-side open end. In the exhaust gas purifying catalyst, the catalyst layer was entirely formed over a total length $L_w$ of a wall flow type substrate 10 in the extending direction (length direction) of the partition wall 13. In the thickness direction of the partition wall, the catalyst layer was formed from a cell wall surface on the side of the inflow-side cell to a cell wall surface on the side of the outflow-side cell. The catalyst layer tended to have an increased supporting rate as the catalyst layer was closer to the cell wall surface on the side of the inflow-side cell. 60% or more of the total mass of the catalyst layer was present in a depth region between the cell wall surface on the side of the inflow-side cell and a position separated by Tw*5/10 from the cell wall surface. 15% or less of the total mass of the catalyst layer was present in a depth region between the cell wall surface on the side of the outflow-side cell and a position separated by Tw*3/10 from the cell wall surface. The coating amount of the catalyst layer after firing was 60.9 g per substrate 1L (excluding the weight of a platinum group metal).

(Comparative Example 1)

By immersing an end face on the side of an outflow-side cell in a catalyst slurry, and subjecting the side of its opposite end to reduced-pressure suction, the catalyst slurry was impregnated and retained in a substrate end. Gas was caused to flow into a substrate from the side of the end face in which the catalyst slurry was impregnated and retained, to coat the catalyst slurry on the surface of pores in a partition wall, and to blow off the excess catalyst slurry from an exhaust gas inflow-side end of the substrate. Then, the substrate on which the catalyst slurry was coated was dried at 150°C while gas was caused to flow into the substrate from an exhaust gas outflow-side end, whereby the dried catalyst slurry was biasedly located toward the side of an outflow-side cell of the partition wall. Except for the operation, an exhaust gas purifying catalyst was produced, which had catalyst layer biasedly located toward the side of the outflow-side cell in a thickness direction from the sealed open end to the exhaust gas outflow-side open end by the same operation as that of Example 1.

(Comparative Example 2)

A wall flow type honeycomb substrate was prepared, which was made of cordierite (number of cells/mil thickness: 300 cpsi/8 mil, diameter: 118.4 mm, total length: 127 mm, porosity: 65%). By immersing an exhaust gas inflow-side end of the substrate in a catalyst slurry, and subjecting the side of its opposite end to reduced-pressure suction, the catalyst slurry was impregnated and retained in a substrate end. Gas was caused to flow into the substrate from the side of the end face in which the catalyst slurry was impregnated and retained, to coat the catalyst slurry on the surface of pores in a partition wall, and to blow off the excess catalyst slurry from an exhaust gas outflow-side end of the substrate. The catalyst amount at this time was set to an amount of a half of the final total mass. Then, the substrate on which the catalyst slurry was coated was dried at 150°C while gas was caused to flow into the substrate from the exhaust gas inflow-side end, whereby the dried catalyst slurry was biasedly located toward the side of an inflow-side cell of the partition wall. The dried catalyst slurry biasedly located toward the side of the inflow-side cell was fired at 550°C in an air atmosphere. Thereby, catalyst layer having catalyst metals biasedly located toward the side of the inflow-side cell in a thickness direction were formed from the sealed open end to the exhaust gas inflow-side open end.

Similarly, by immersing the exhaust gas outflow-side end of the substrate in the catalyst slurry, and subjecting the side of its opposite end to reduced-pressure suction, the catalyst slurry was impregnated and retained in a substrate end. Gas was caused to flow into the substrate from the side of the end face in which the catalyst slurry was impregnated and retained, to coat the catalyst slurry on the surface of pores in the partition wall, and to blow off the excess catalyst slurry from the exhaust gas inflow-side end of the substrate. The catalyst amount at this time was set to an amount of a half of the final total mass, as described above. Then, the substrate on which the catalyst slurry was coated was dried at 150°C while gas was caused to flow into the substrate from the exhaust gas outflow-side end, whereby the dried catalyst slurry was biasedly located toward the side of the outflow-side cell of the partition wall. The dried catalyst slurry biasedly located toward the side of the outflow-side cell was fired at 550°C in an air atmosphere. Thereby, catalyst layer having catalyst metals biasedly located toward the side of the outflow-side cell in the thickness direction were formed from the sealed open end to the exhaust gas outflow-side open end. As a result, an exhaust gas purifying catalyst was produced, which had the catalyst layer substantially uniformly present over the entire partition wall. The coating amount of the catalyst layer after firing was 60.9 g per substrate 1L (excluding the weight of a platinum group metal).

[Measurement of Particle Size Distribution]

The D90 particle size of the catalyst slurry was measured by a laser scattering method using a laser diffraction particle size analyzer SALD-3100 manufactured by Shimadzu Corporation.

[Calculation of Porosity]

Samples (1 cm$^3$) for measuring a pore diameter (modal diameter) and a pore volume were collected from partition walls of an exhaust gas inflow-side portion, exhaust gas outflow-side portion, and intermediate portion of the exhaust gas purifying catalysts produced in Example and Comparative Examples, and the substrate before the catalyst slurry was coated. The samples for measurement were dried, and distributions of pores were then measured by a mercury intrusion method using a mercury porosimeter (trade names: PASCAL140 and PASCAL440, manufactured by Thermo Fisher Scientific Corporation). In this case, a low-pressure region (0 to 400 Kpa) was measured by PASCAL140, and a high-pressure region (0.1 Mpa to 400 Mpa) was measured by PASCAL440. From the obtained distributions of pores, a pore diameter (modal diameter) was obtained, and pore volumes of pores each having a pore diameter of 1 $\mu$m or more were calculated. As the values of the pore diameters and pore volumes, the average value of the values obtained in the exhaust gas inflow-side portion, the exhaust gas outflow-side portion, and the intermediate portion was employed.

Then, the porosities of the exhaust gas purifying catalysts produced in Example and Comparative Examples were calculated according to the following formula. The results are shown in the following Table 1.

```
       Porosity of Exhaust Gas Purifying Catalyst (%) =

   Pore Volume of Exhaust Gas Purifying Catalyst (cc/g)/Pore

    Volume of Substrate (cc/g)×Porosity of Substrate (%)

         Porosity of Substrate (%) = 65%
```

[Table 1]

|  | Pore diameter ($\mu$m) | Porosity (%) |
|---|---|---|
| Substrate | 15.98 | 65.0 |
| Example 1 | 15.66 | 39.0 |
| Comparative Example 1 | 15.99 | 38.4 |

(continued)

|  | Pore diameter ($\mu$m) | Porosity (%) |
|---|---|---|
| Comparative Example 2 | 15.10 | 41.2 |

[Measurement of Pressure Loss]

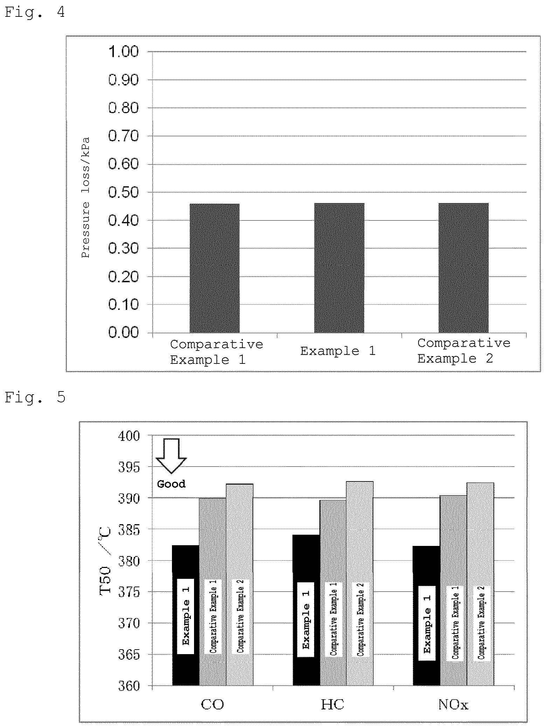

The exhaust gas purifying catalysts produced in Example and Comparative Examples were set in a pressure loss measuring device (manufactured by Tsukubarikaseiki Corporation), and air having room temperature was caused to flow into the set exhaust gas purifying catalysts. A value obtained by measuring a differential pressure of the air on introduction and outflow-sides when the outflow amount of the air from the exhaust gas purifying catalyst was 2 m$^3$/min was taken as the pressure loss of the exhaust gas purifying catalyst. The results are shown in Figure 4. As shown in Figure 4, it is found that the exhaust gas purifying catalyst produced in Example has pressure loss equivalent to that of the exhaust gas purifying catalysts produced in Comparative Examples, and there is no difference in the pressure loss depending on the position of the catalyst layer.

[Durability of Actual Device and Evaluation of Actual Device]

Each of the exhaust gas purifying catalysts produced in Example and Comparative Examples was stored in a catalyst convertor, and set at a position immediately below an exhaust line of an engine set at a durability bench. Then, the engine was started, to carry out a durability test using an actual device at 950°C for 20 hours with a stoichiometric state ($\lambda$ = 1) for 20 seconds, a fuel cut for 5 seconds, and a rich spike ($\lambda$ = 0.8276) for 5 seconds being taken as one cycle.
Then, evaluation was carried out using an engine bench under conditions shown in the following Table 2 to measure light-off performance (temperature at which a purification rate reached 50%: T50). The results are shown in Table 3 and Figure 5. As shown in Figure 5, the exhaust gas purifying catalyst produced in Example exhibited more excellent light-off performance than that of the exhaust gas purifying catalysts produced in Comparative Examples. Thereby, it was found that the exhaust gas purifying catalyst is obtained, which suppresses an increase in pressure loss and has improved exhaust gas purifying performance.

[Table 2]

| Light-off evaluation | | |
|---|---|---|
| Space velocity | | 65000h$^{-1}$ |
| Temperature rise speed | | 30°C/min |
| Air-fuel ratio | | $\lambda$=1 |
| Main gas composition | CO | 0.50% |
| | Total HC | 0.05%C |
| | NOx | 0.14% |
| | O$_2$ | 0.35% |
| | Others | N$_2$, H$_2$O, CO$_2$ and the like |

[Table 3]

| | T50 [°C] | | |
|---|---|---|---|
| | CO | HC | NOx |
| Example 1 | 382.4 | 384.1 | 382.3 |
| Comparative Example 1 | 389.9 | 389.6 | 390.4 |
| Comparative Example 2 | 392.2 | 392.6 | 392.4 |

[Observation of Coat State]

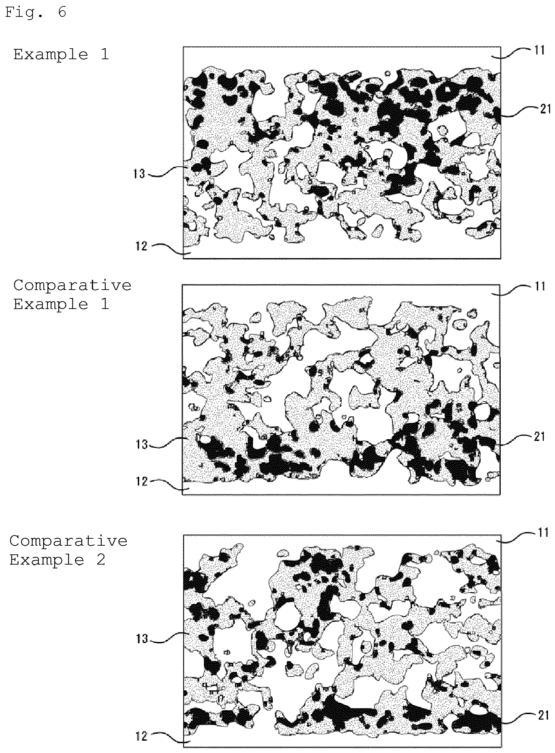

A sample (1 cm$^3$) for measurement of a scanning electron microscope (SEM) was produced from the partition wall of each of the exhaust gas purifying catalysts produced in Example and Comparative Examples. The sample for measurement was embedded in a resin, and subjected to vapor deposition as a pretreatment. The sample for measurement after the pretreatment was observed using a scanning electron microscope (trade name: ULTRA55, manufactured by Carl Zeiss Corporation), and the state of the catalyst layer supported on the substrate was confirmed. The tracing diagram is shown in Figure 6.

Industrial Applicability

An exhaust gas purifying catalyst of the present invention removes a particulate material contained in exhaust gas of a gasoline engine, whereby the exhaust gas purifying catalyst can be widely and effectively utilized. The exhaust gas purifying catalyst of the present invention removes a particulate material contained in exhaust gas of not only the gasoline engine but also a diesel engine, a jet engine, a boiler, or a gas turbine or the like, whereby the exhaust gas purifying catalyst can be effectively utilized.

Reference Signs List

| | |
|---|---|
| 10 ... | wall flow type substrate |
| 11 ... | inflow-side cell |
| 11a ... | exhaust gas inflow-side end |
| 12 ... | outflow-side cell |
| 12a ... | exhaust gas outflow-side end |
| 13 ... | partition wall |
| 21 ... | catalyst layer |
| 21a ... | catalyst slurry |
| 21a' ... | dried catalyst slurry |
| 100 ... | exhaust gas purifying catalyst |

**Claims**

1. An exhaust gas purifying catalyst for purifying exhaust gas discharged from an internal combustion engine, comprising:

   a wall flow type substrate in which an inflow-side cell having an open exhaust gas inflow-side end, and an outflow-side cell adjacent to the inflow-side cell and having an open exhaust gas outflow-side end are separated by a porous partition wall; and
   a catalyst layer formed at a plurality of locations in pores of the partition wall and containing at least one catalyst metal,
   wherein the catalyst layer is biasedly located toward a side of the inflow-side cell in a thickness direction of the partition wall.

2. The exhaust gas purifying catalyst according to claim 1, wherein the catalyst layer tends to have an increased supporting rate as the catalyst layer is closer to a cell wall surface on the side of the inflow-side cell in the thickness direction of the partition wall.

3. The exhaust gas purifying catalyst according to claim 1 or 2, wherein, when a wall thickness of the partition wall is taken as Tw, 60% or more of a total mass of the catalyst layer is present in a depth region between a cell wall surface on the side of the inflow-side cell and a position separated by Tw*5/10 from the cell wall surface.

4. The exhaust gas purifying catalyst according to any one of claims 1 to 3, wherein, when a wall thickness of the partition wall is taken as Tw, 15% or less of a total mass of the catalyst layer is present in a depth region between a cell wall surface on a side of the outflow-side cell and a position separated by Tw*3/10 from the cell wall surface.

5. The exhaust gas purifying catalyst according to any one of claims 1 to 4, wherein the catalyst layer is entirely formed in an extending direction of the partition wall.

6. The exhaust gas purifying catalyst according to any one of claims 1 to 5, wherein the catalyst layer are formed from a cell wall surface on a side of the inflow-side cell to a cell wall surface on a side of the outflow-side cell in the thickness direction of the partition wall.

7. The exhaust gas purifying catalyst according to any one of claims 1 to 6, wherein the catalyst metal contains Rh, Pd, and Rh, or Pt and Rh.

8. The exhaust gas purifying catalyst according to any one of claims 1 to 7, wherein the internal combustion engine is a gasoline engine.

Fig. 1

Fig. 2

Fig. 3

Fig. 4

Fig. 5

Fig. 6

Example 1

Comparative
Example 1

Comparative
Example 2

EP 3 795 248 A1

## INTERNATIONAL SEARCH REPORT

International application No.

PCT/JP2019/019437

### A. CLASSIFICATION OF SUBJECT MATTER
Int.Cl. B01J35/04(2006.01)i, B01D39/14(2006.01)i, B01D53/94(2006.01)i, B01J23/63(2006.01)i, F01N3/022(2006.01)i, F01N3/035(2006.01)i, F01N3/10(2006.01)i, F01N3/28(2006.01)i
According to International Patent Classification (IPC) or to both national classification and IPC

### B. FIELDS SEARCHED

Minimum documentation searched (classification system followed by classification symbols)
Int.Cl. B01J35/04, B01D39/14, B01D53/94, B01J23/63, F01N3/022, F01N3/035, F01N3/10, F01N3/28

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2013-158678 A (NIPPON SOKEN INC.) 19 August 2013, claims 1-7, paragraphs [0042]-[0069], fig. 3 (Family: none) | 1, 3-6<br>2, 7-8 |
| X<br>A | JP 2006-007117 A (NE CHEMCAT CORP.) 12 January 2006, claims 1-3, 5, 7-8, paragraphs [0022], [0023], fig. 1 (Family: none) | 1, 3-5, 7<br>2, 6, 8 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29.07.2019 | 06.08.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## INTERNATIONAL SEARCH REPORT

| International application No. |
|---|
| PCT/JP2019/019437 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2017-177007 A (NGK INSULATORS LTD.) 05 October 2017, claims 1, 5, paragraphs [0024], [0025], fig. 3A, 3B<br>& US 2017/0282125 A1, claims 1, 5, paragraphs [0035]-[0037], fig. 3A, 3B & DE 102017002807 A & CN 107269355 A | 1-8 |
| A | WO 2016/160988 A1 (BASF CORPORATION) 06 October 2016, claims 1-23, fig. 3<br>& JP 2018-512538 A, claims 1-23, fig. 3 & US 2018/0111089 A1 & EP 3277403 A1 & CA 2981060 A & KR 10-2017-0130562 A & CN 107690352 A | 1-8 |
| A | WO 2008/126861 A1 (TOYOTA MOTOR CORPORATION) 23 October 2008, claims 1-6, paragraph [0035], fig. 2<br>& US 2010/0061900 A1, claims 1-6, paragraph [0047] & EP 2133148 A1 & KR 10-2009-0113378 A & CN 101636228 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016060048 A
- WO 2016060049 A
- WO 2016060050 A